# EUROPÄISCHE PATENTANMELDUNG

(11) **EP 2 053 569 A2**
(43) Veröffentlichungstag der Anmeldung: **29.04.2009**
(21) Anmeldenummer: 08018074.8
(22) Anmeldetag: 15.10.2008
(51) Int. Cl.: G07F 7/10

(54) **Verfahren zur auf einer PIN basierenden Sicherung eines tragbaren Datenträgers gegen unberechtigte Nutzung**

(30) Priorität: 25.10.2007 DE 102007051398
(71) Anmelder: Giesecke & Devrient GmbH, 81677 München (DE)
(72) Erfinder: Nordmann, Frank, 85737 Ismaning (DE)

(57) **Zusammenfassung**

Vorgeschlagen wird ein Verfahren zur auf einer PIN basierenden Sicherung einer Chipkarte gegen unberechtigte Nutzung. Erfindungsgemäß wird vor Übergabe der Chipkarte an einen berechtigten Benutzer gemäß einer Bildungsvorschrift eine kartenindividuelle Start-PIN erzeugt (102) und auf dem tragbaren Datenträger gespeichert. Weiter wird dem Benutzer die Bildungsvorschrift bekannt gemacht (107). Bei erstmaliger Nutzung der Chipkarte präsentiert der Benutzer die Start-PIN (112). Gelingt dies erfolgreich, erzwingt die Chipkarte nachfolgend unmittelbar die Einstellung eine neuen, fortan geltenden Benutzer-PIN durch den Benutzer (116).

## Beschreibung

Die Erfindung geht aus von einem Verfahren nach der Gattung des Hauptanspruchs. Ein solches ist bekannt aus der DE 195 07 044 C2. Danach wird eine Chipkarte vor Herausgabe an einen Benutzer auf eine für alle Chipkarten einheitliche und dem Benutzer bekannte feste PIN eingestellt, die keinen Zugriff auf die Kartenfunktionen erlaubt, sondern nur die Einstellung einer Benutzer-PIN ermöglicht. Bei erstmaliger Nutzung der Chipkarte gibt der Benutzer zunächst die voreingestellte Einheits-PIN ein und legt unmittelbar anschließend eine nachfolgend gültige Benutzer-PIN fest. Das Verfahren erübrigt den sonst üblichen parallel zur Übergabe der Chipkarte notwendigen Versand eines PIN-Briefes, in dem einem Benutzer die für seine Chipkarte gültige PIN separat mitgeteilt wird. Zugleich ist ein ggf. erfolgter Mißbrauch einer Chipkarte für einen Benutzer leicht daran erkennbar, daß die Einheits-PIN nicht mehr gültig ist. Das Verfahren hat allerdings den Nachteil, daß ein Mißbrauch von Karten durch Dritte, sofern diese die Karten vor erstmaliger Benutzung abfangen, leicht möglich ist.

Es ist Aufgabe der Erfindung ein Verfahren zur Sicherung eines tragbaren Datenträgers gegen unberechtigte Nutzung anzugeben, das ohne PIN-Brief auskommt, dabei aber dennoch eine höhere Sicherheit bereits vor Übergabe des tragbaren Datenträgers an den Benutzer bietet.

Diese Aufgabe wird gelöst durch ein Verfahren mit den Merkmalen des Anspruchs 1. Die Erfindung beruht auf der Idee, die bei Übergabe an einen Benutzer eingestellte Start-PIN mit Hilfe einer Bildungsvorschrift zu erzeugen, welche von einer für jeden Datenträger individuellen Information ausgeht und entsprechend eine datenträgerindividuelle Start-PIN liefert. Die Einrichtung des erfindungsgemäßen Verfahrens kann ohne wesentliche Veränderungen an den bestehenden Personalisierungseinrichtungen oder an der Infrastruktur zur Prüfung von PINs vorgenommen werden. Das erfindungsgemäße Verfahren ist sehr benutzerfreundlich und leicht anwendbar. Die verwendete Bildungsvorschrift kann ohne Nachteile in für jedermann zugänglicher Weise öffentlich bekannt gemacht werden, etwa über das Internet. In zweckmäßiger Ausführung besteht die Bildungsvorschrift darin, als Start-PIN das Geburtsdatum des jeweiligen Datenträgerbenutzers ganz oder teilweise zu verwenden. Besonders vorteilhaft dient als Grundlage für die Anwendung der Bildungsvorschrift eine Information, die zwar bei der Personalisierung des Datenträgers vorhanden, die aber nicht oder nur verschlüsselt auf dem Datenträger hinterlegt wird. Diese Information kann wiederum zum Beispiel einfach das Geburtsdatum sein, wenn dieses nicht auch in optisch lesbarer Form auf den Datenträger aufgebracht wird. Das erfindungsgemäße Verfahren hat dann den wesentlichen Vorteil, daß ein tragbarer Datenträger auch dann nicht von einem Dritten unberechtigt benutzt werden kann, wenn dieser den Datenträger vor seiner erstmaligen Nutzung durch einen berechtigten Benutzer abfangen kann. Das erfindungsgemäße Verfahren eignet sich in besonders vorteilhafter Weise zur Verwendung in Chipkarten, die zum Beispiel als Krankenversicherungskarten an Benutzer ausgegeben werden.

Ein Ausführungsbeispiel der Erfindung wird nachfolgend unter Bezugnahme auf die Zeichnung näher erläutert.

Die Figur zeigt einen Ausschnitt aus dem Lebenslauf eines tragbaren Datenträgers ausgehend von der Bereitstellung von Personalisierungsdaten bis zur Festlegung einer Nutzer-PIN.

Für die nachfolgende Beschreibung wird davon ausgegangen, daß der tragbare Datenträger in Gestalt einer üblichen Chipkarte vorliegt, die über einen integrierten Schaltkreis mit einem Speicher, nicht jedoch über eine eigene Benutzerschnittstelle verfügt. Unter einem tragbarem Datenträger sollen daneben aber auch in anderen Bauformen ausgestaltete persönliche elektronische Geräte verstanden werden, die über einen Mikroprozessor mit Speicher verfügen, keine oder nur eine eingeschränkte Benutzerschnittstelle aufweisen, PIN-gesichert, zur ständigen Mitführung durch einen Benutzer vorgesehen und deshalb entsprechend baulich klein ausgeführt sind. Neben dem Chipkartenformat kommen so etwa tragbare Datenträger im Format von SD-Karten oder USB-Speichertoken in Betracht.

Auf der Chipkarte befindet sich wenigstens eine PIN-gesicherte Funktion. Daneben können sich auf der Chipkarte weitere nicht durch eine PIN gesicherte Funktionen befinden.

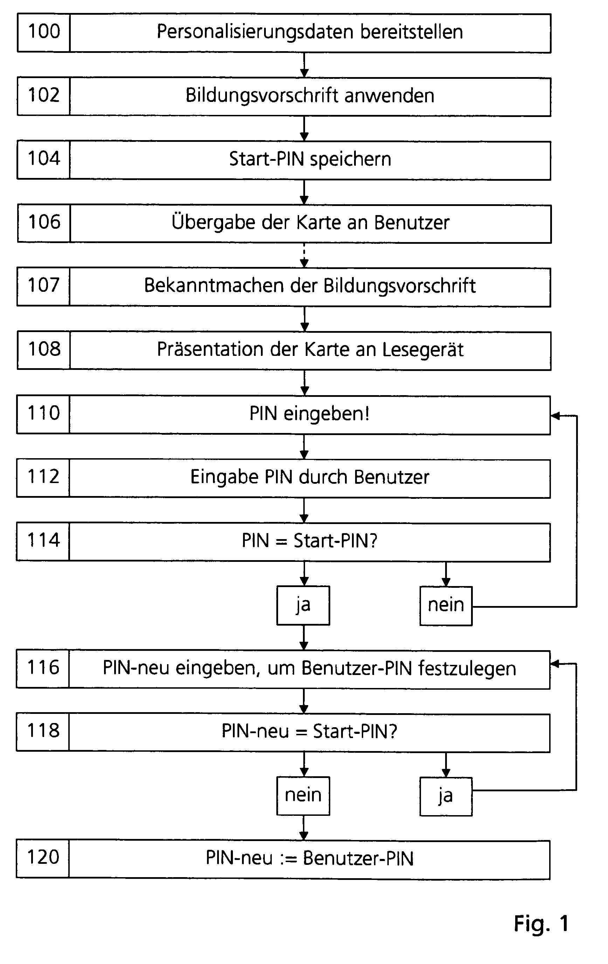

Das in Fig.1 dargestellte Verfahren setzt ein mit der Bereitstellung von Personalisierungsdaten, mit denen eine Chipkarte auf einen Nutzer personalisiert wird, Schritt 100. Die Personalisierungsdaten umfassen zum einen elektrische Daten, die ganz oder teilweise in den Speicher des integrierten Schaltkreises der Chipkarte geschrieben werden, zum anderen optische Daten, etwa alphanumerische Zeichen oder Fotos, die auf den Kartenkörper aufgebracht werden, so daß sie in der Regel ohne Hilfsmittel für jedermann erkennbar sind.

Auf die Personalisierungsdaten wird im folgenden Schritt, 102, eine Bildungsvorschrift angewandt, um aus den Personalisierungsdaten eine für die Chipkarte individuelle Start-PIN abzuleiten.

Die Bildungsvorschrift kann darin bestehen, aus den Personalisierungsdaten das Geburtsdatum des Benutzers zu ermitteln und dieses als Start-PIN einzusetzen. Besonders gut geeignet ist die Verwendung des Geburtsdatums vor allem dann, wenn das Geburtsdatum nicht in lesbarer Form auf dem Kartenkörper optisch wiedergegeben ist. Durch Verwendung nur des Geburtsjahres kann dabei beispielsweise eine vierstellige Erst-PIN realisiert werden oder durch Hinzuziehung des Geburtsmonats eine sechsstellige Erst-PIN.

Alternativ zum Geburtsdatum kann eine beliebige andere, den Nutzer charakterisierende Information herangezogen werden, etwa die Postleitzahl seines Wohnortes, seine Telefonnummer, ein Straßenname, der Vorname oder dergleichen. Die Bildungsvorschrift kann auch darin bestehen, derartige Informationen zu kombinieren, indem etwa die beiden letzten Stellen der Hausnummer mit den beiden letzten Stellen des Geburtsdatums zusammengefügt werden.

Besonders zweckmäßig wird zur Bildung der Erst-PIN eine Information verwendet, die auf der Chipkarte selbst weder elektrisch noch optisch im Klartext hinterlegt wird; in Betracht kommen hierfür beispielsweise das Autokennzeichen des Benutzers oder ein Codewort, das nur verschlüsselt auf der Chipkarte gespeichert wird. Neben den elektrischen können auch optische Personalisierungsinformationen in die Bildung der Start-PIN einfließen. Beispielsweise kann ein Teil der Start-PIN durch eine auf den Kartenkörper im Klartext aufgebrachte Seriennummer gebildet sein. Bei weniger hohen Sicherheitsvorgaben kann auch vollständig auf eine optische Personalisierungsinformation zurückgegriffen und können beispielsweise bestimmte Stellen der Kartennummer als Erst-PIN gewählt werden.

Die Start-PIN wird, Schritt 104, zusammen mit den Personalisierungsdaten in einem üblichen Personalisierungsprozeß auf die Chipkarte gebracht. Die vollständig personalisierte Chipkarte wird anschließend, Schritt 106, an den Benutzer, auf den sie personalisiert wurde, ausgegeben.

Unabhängig von der Übergabe der Chipkarte an den Benutzer wird ihm die Bildungsvorschrift zur Erzeugung der Start-PIN bekannt gemacht, Schritt 107. Die Mitteilung kann zentral öffentlich erfolgen, etwa über eine entsprechende Seite im Internet, auf die ein Benutzer jederzeit zugreifen kann. Alternativ kann die Mitteilung zusammen mit der Übergabe der Chipkarte erfolgen, z.B. in Papierform. In einer weiteren Variante erfolgt die Mitteilung elektronisch in einer parallel zur Übergabe der Chipkarte versandten Email. Denkbar ist auch, die Mitteilung auf der Chipkarte selbst zu hinterlegen und sie bei der ersten Nutzung als Teil einer Bedienerführung zu präsentieren.

Nach Erhalt die Chipkarte ermittelt der Benutzer aus der mitgeteilten Bildungsvorschrift die Start-PIN. Nachfolgend präsentiert er die Chipkarte zur erstmaligen Nutzung der PIN-gesicherten Funktion an einem entsprechenden Lesegerät, Schritt 108. Auf die Auswahl der PIN-gesicherten Funktion fordert das Lesegerät den Benutzer zur Eingabe einer PIN auf, Schritt 110. Der Benutzer gibt daraufhin die gemäß der Bildungsvorschrift ermittelte Start-PIN ein, Schritt 112. Da die PIN-gesicherte Funktion erstmals benutzt wird, gibt der Benutzer die ihm bekannte Start-PIN ein.

Auf der Chipkarte ist, da erstmals auf die PIN-gesicherte Funktion zugegriffen wird, als PIN die Start-PIN eingestellt. Die Chipkarte prüft deshalb, Schritt 114, ob die vom Benutzer zuvor eingegebene PIN die Start-PIN ist.

Wurde die Start-PIN erfolgreich präsentiert, fordert die Chipkarte den Benutzer zweckmäßig unmittelbar anschließend über das Lesegerät auf, eine neue PIN als fortan geltende Benutzer-PIN festzulegen, Schritt 116. Der Benutzer gibt daraufhin eine von ihm frei festgelegte neue PIN als Benutzer-PIN ein. Nach Eingabe prüft die Chipkarte, ob die vom Benutzer eingegebene neue PIN der Start-PIN entspricht, Schritt 118. Ist das nicht der Fall, d.h. ist die vom Benutzer neu eingegebene PIN verschieden von der Start-PIN, übernimmt die Chipkarte die neue PIN als fortan geltende Benutzer-PIN, Schritt 120. Zudem gibt sie die Nutzung der PIN-gesicherten Funktion frei.

Entspricht in Schritt 118 die vom Benutzer neu eingegebene PIN der Start-PIN, lehnt die Chipkarte deren Übernahme als Benutzer-PIN ab. Stattdessen fordert sie den Benutzer erneut auf, eine neue PIN festzulegen und hierzu Schritt 116 auszuführen.

Erweist sich die vom Benutzer in Schritt 112 eingegebene Start-PIN als ungültig, d.h. wurde von einem Dritten bereits die Festlegung einer Benutzer-PIN vorgenommen, erkennt der Benutzer das. Die Chipkarte ist in diesem Fall kompromittiert.

Zur Absicherung der PIN-Änderung können übliche Sicherheitsroutinen vorgesehen sein, etwa die zwei- oder mehrmalige richtige Eingabe einer neuen, fortan als Benutzer-PIN geltenden PIN, oder das Begrenzen von Eingabeversuchen auf vorgegebene Höchstwerte. Zweckmäßig ist auch eine weitgehende Benutzerführung vorgesehen, durch die der Benutzer beispielsweise darauf hingewiesen wird, als Benutzer-PIN eine von der Start-PIN verschiedene PIN zu wählen. Vorgesehen sein kann ferner, daß nach erfolgreicher Präsentation einer Start-PIN die PIN-gesicherte Funktion teilweise bereits nutzbar ist und Festlegung einer Benutzer-PIN zu einem späteren Zeitpunkt erfolgen kann.

## Patentansprüche

1. Verfahren zur auf einer PIN basierenden Sicherung eines tragbaren Datenträgers gegen unberechtigte Nutzung, **dadurch gekennzeichnet, daß** vor Übergabe an einen berechtigten Benutzer gemäß einer Bildungsvorschrift eine kartenindividuelle Start-PIN erzeugt und auf dem tragbaren Datenträger gespeichert wird, die Bildungsvorschrift dem Benutzer bekannt gemacht wird, um es dem Benutzer zu ermöglichen, die Start-PIN zu ermitteln, und die erfolgreiche Präsentation der Start-PIN erzwingt, daß nachfolgend eine neue PIN als fortan geltende Benutzer-PIN eingestellt wird.

2. Verfahren nach Anspruch 1, **dadurch gekennzeichnet, daß** die Bildungsvorschrift darin besteht, das Geburtsdatum des Benutzers zu ermitteln.

3. Verfahren nach Anspruch 1, **dadurch gekennzeichnet, daß** die Bildungsvorschrift vorsieht, eine optisch erkennbar auf dem tragbaren Datenträger ausgebildete Information zu ermitteln.

4. Verfahren nach Anspruch 1, **dadurch gekennzeichnet, daß** geprüft wird, ob eine von einem Benutzer neu eingegebene PIN die Start-PIN ist und bejahendenfalls die Übernahme als fortan geltende Nutzer-PIN verweigert wird.

5. Verfahren nach Anspruch 1, **dadurch gekennzeichnet, daß** die Bildungsvorschrift darin besteht eine benutzerindividuelle Information zu ermitteln, die bei der Personalisierung des tragbaren Datenträgers entweder gar nicht oder nur in verschlüsselter Form auf diesem hinterlegt wird.

6. Verwendung des Verfahrens nach Anspruch 1 zur Verteilung von Chipkarten an Benutzer.
